# EUROPEAN PATENT SPECIFICATION

(11) **EP 1 026 819 B1**
(45) Date of publication and mention of the grant of the patent: **16.11.2005**
(21) Application number: 00100268.2
(22) Date of filing: 19.01.2000
(51) Int. Cl.: H02P 5/50, G05D 13/62

(54) **Control method for determining a synchronous position and a rotary machine capable of synchronous driving thereby**
Regelungsverfahren zur Bestimmung einer synchronen Position und eine rotierende Maschine, die damit synchron dreht
Méthode de régulation pour déterminer la position synchrone et une machine tournante, l'utilisant synchronement

(30) Priority: 01.02.1999 JP 2361299
(43) Date of publication of application: 09.08.2000
(73) Proprietor: KABUSHIKI KAISHA TOKYO KIKAI SEISAKUSHO, Tokyo (JP)
(72) Inventor: Shiba, Noriyuki, Tokyo (JP); Akiyama, Toru, c/o Toyodenki Seizo K.K., Ebina-shi, Kanagawa (JP)
(74) Representative: Klingseisen, Franz

(56) References cited:
- DE-A- 2 924 070
- DE-A- 3 534 820
- US-A- 1 353 420
- PATENT ABSTRACTS OF JAPAN vol. 1995, no. 01, 28 February 1995 (1995-02-28) & JP 06 296389 A (YASKAWA ELECTRIC CORP), 21 October 1994 (1994-10-21)
- PATENT ABSTRACTS OF JAPAN vol. 017, no. 411 (E-1406), 30 July 1993 (1993-07-30) & JP 05 076194 A (TOSHIBA CORP), 26 March 1993 (1993-03-26)
- PATENT ABSTRACTS OF JAPAN vol. 1995, no. 04, 31 May 1995 (1995-05-31) & JP 07 023582 A (MITSUBISHI ELECTRIC CORP), 24 January 1995 (1995-01-24)
- PATENT ABSTRACTS OF JAPAN vol. 013, no. 195 (E-754), 10 May 1989 (1989-05-10) & JP 01 016284 A (MATSUSHITA ELECTRIC IND CO LTD), 19 January 1989 (1989-01-19)
- WUNDER J: "KOSTENGUNSTIGE ALTERNATIVE BURSTENLOSE WICKELANTRIEBE MIT FREQUENZUMRICHTERN" ELEKTROTECHNIK, VOGEL VERLAG K.G. WURZBURG, DE, vol. 76, no. 10, 14 October 1994 (1994-10-14), page 16,18,21 XP000468331 ISSN: 1431-9578
- HANNEMANN K: "A DIGITAL CONTROLLER FOR SYNCHRO, POSITION OR SPEED CONTROL DUTIES" SIEMENS ENERGY & AUTOMATION, SIEMENS AG. BERLIN, DE, vol. 9, no. 1, 1 April 1989 (1989-04-01), pages 15-17, XP000071437

## Description

### Background of the Invention

### Field of the Invention

This invention relates to a control method for the synchronous position driving of a machine extension, which is not connected to a fixed machine, and a rotary machine capable of synchronously driving thereby.

### Description of the Related Art

In the prior art, when a new unit (for example a press unit) is extended additionally or attached to a fixed rotary machine, it is necessary for an axis of the extension rotary machine to be synchronously driven.

DE 35 34 820 A describes a synchronisation method for a manufacturing process by using clock pulses generated by master and slave stages. A fitting stage operates as a master in synchronism with a capping stage that operates as a slave. The units generate a clock pulse per production cycle and a series of higher frequency pulses. The clock pulses are supplied to a counter that operates as a differencing unit and outputs an error signal to an analogue regulator controlling the slave stage. Control pulses are also counted and the valves compared to apply a connection to the regulator to maintain the units in synchronism.

JP-05-296389 A describes a servomotor control method wherein a feedback pulse signal value provided by a master servomotor and a speed command value provided by a slave servomotor are compared with each other, and when the absolute value of a difference error signal is larger than a certain constant, a speed command value from a slave speed command unit is input to the slave servomotor in order to enable synchronous operation.

However, for several applications, the extension unit should be driven such as to provide for a particular accurate synchronisation with the fixed machine.

The present invention improves upon the above-mentioned matters.

### Brief Summary of the Invention

A first object of the present invention is to provide a synchronous position control device capable of controlling synchronous position with high accuracy, without a mechanical connection between an axis of a fixed rotary machine and an axis of an added unit when a new unit is attached to a fixed rotary machine.

A second object of the present invention is to provide a rotary machine which is capable of synchronously driving the extension unit and the fixed rotary machine without a mechanical connection between the axis of the fixed rotary machine and the axis of the extension unit, and which is easy to extend further.

These objects are achieved by the subject matters of claims 1 and 2.

Further, in order to synchronously control a position of a fixed machine and an extension machine with high accuracy without the connection, a first rotary encoder is arranged on a driving axis of the fixed machine to give pulse signals occurring therein to a synchronous position control device as reference rotational frequency signals and reference position signals of the extension machine.

On the other hand, a second rotary encoder is arranged on an axis of the extension machine to give a synchronous position control device.

The synchronous position control device receives output pulses of the first rotary encoder to provide rotational frequency instruction and position instruction signals, and receives output pulses of the second rotary encoder to provide rotational frequency feedback and position feedback signals, to determine position/rotational frequency errors from these signals to control a motor of the extension machine.

As mentioned above, when a unit is extended to a fixed machine, a moving first rotary encoder is linked with an axis of a fixed machine, and a moving second rotary encoder is linked with an axis of an extension, machine so that, in the synchronous position control device, the output pulses of the first rotary encoder provide rotational frequency instruction and position instruction signals, and the second rotary encoder provide rotational frequency feedback and position feedback signals. Using such signals, the extension machine and the fixed machine can be driven synchronously without a mechanical connection between them.

Since a new unit can be extended without a mechanical connection of the fixed rotary machine and the extension unit, even when a new unit is extended to a fixed rotary machine which connects plural units mechanically to drive them, the extension of the unit is easy.

The features and advantage of the present invention will be apparent from the following mode for implementing the invention together with the accompanying drawings.

### Brief Explanation of the Drawings

FIG. 1 shows a whole component figure showing a mode for implementing the rotary machine of the present invention.
FIG. 2 shows a principal part component of an embodied mode for implementing a synchronous position control device of the present invention shown in FIG. 1.

### Detail Description of the Invention

The mode for implementing the invention is explained by an example, which is applied to a rotary machine. Now, the object of the present invention is not limited to the rotary machine, but it may be applied to other various devices where synchronous control is necessary.

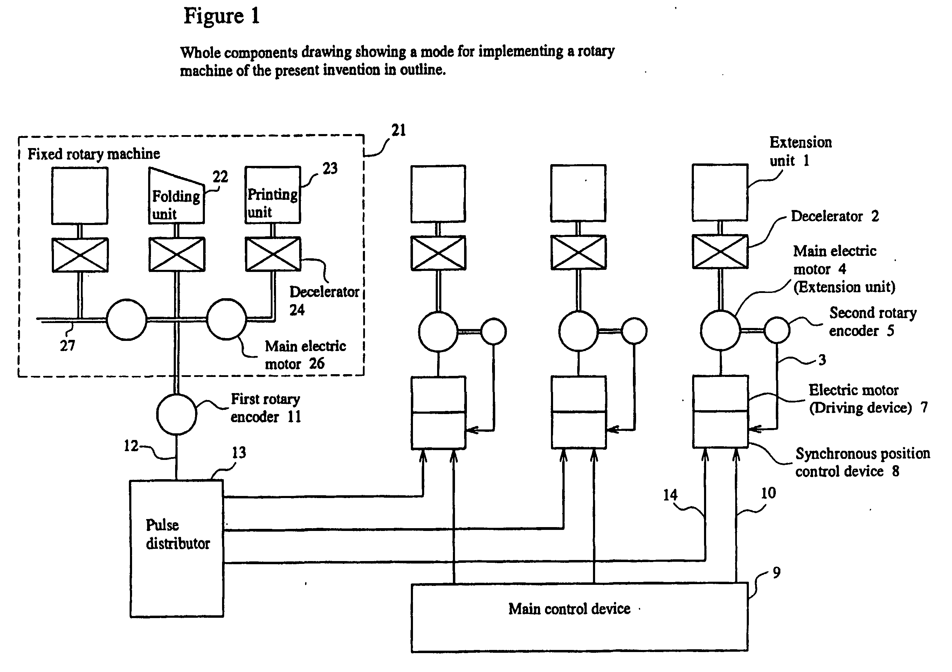

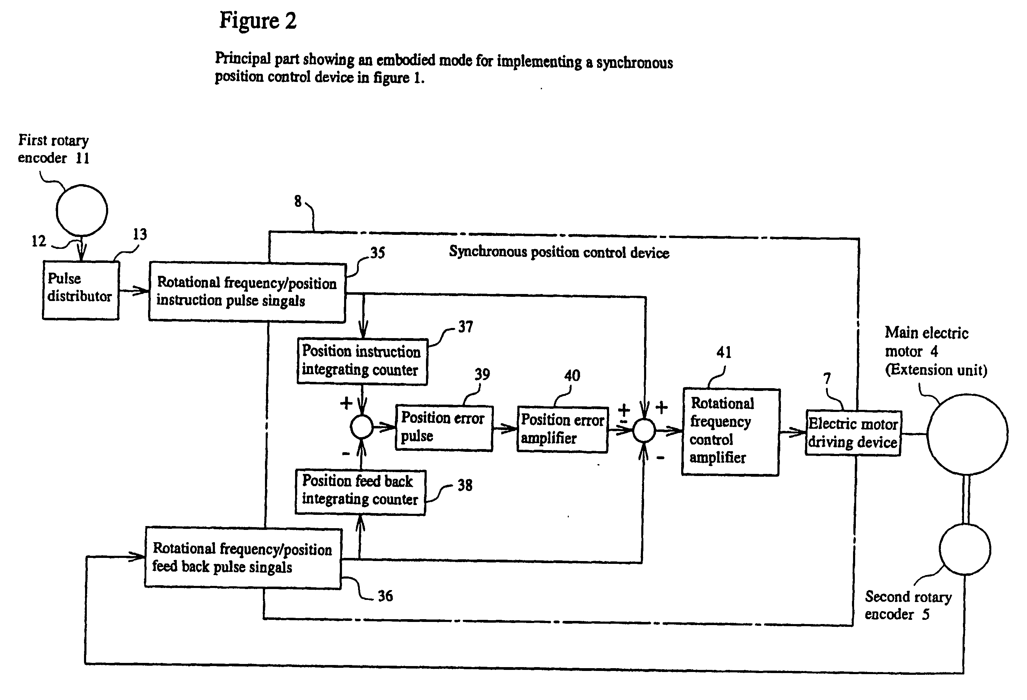

FIG. 1 shows a whole component drawing showing a mode for implementing the rotary machine of the present invention. FIG. 2 shows a principal part component showing an embodied mode for implementing synchronous position control device 8 of FIG. 1.

In FIG. 1, element 1 is an extension unit like a press machine etc., 2 is a decelerator, 4 is a main electric motor of the extension unit, 5 is a second rotary encoder attached to the main electric motor of the extension unit, and the extension unit 1, the decelerator 2, the main electric motor 4 and the second rotary encoder 5 are connected mechanically as shown by double lines in the figure.

Line 3 carries rotational frequency feedback and position feedback signals which are output from the second rotary encoder, 7 is an electric motor driving device which drives the main electric motor 4, 8 is a synchronous position control device, which is explained later, 9 is a main control device, and control signals 10, output from the main control device to the synchronous position control device 8, and rotational frequency reference and position reference signals 14 output from the pulse distributor 13 (explained later) are given to the synchronous position control device 8, and the synchronous position control device 8 executes the synchronous control of the main electric motor 4 based on the above-mentioned rotational frequency feedback and position feedback signal 6 and the rotational frequency reference and position reference signals 14.

Now, in FIG. 1, the extension units are shown by three units, but each extension unit has the same components, so that one unit only is explained.

Block 21 shows a whole fixed rotary machine, all parts of which are connected by a driving axis (main axis) 27. Here, 22 is a folding unit, 23 is a printing unit, 24 is a decelerator, 26 is a main electric motor of the fixed rotary machine, and 27 is the driving axis (main axis) of the fixed rotary machine.

A first rotary encoder 11 is attached to the driving axis (main axis) 27 of the fixed rotary machine, and the first rotary encoder 11 outputs the rotational frequency detecting and position detecting signal 12 of the driving axis (main axis) of the fixed rotary machine. This signal 12 is given to the pulse distributor 13 and the pulse distributor 13 outputs the rotational frequency reference and position reference signals 14 based on the above-mentioned rotational frequency detection and position detection signal 12, and these signals 14 are sent to each extension unit.

In FIG. 2, 11 is the first rotary encoder, 13 is the pulse distributor, and the rotational frequency reference and position reference signals output from the pulse distributor 13 are inputs to the synchronous position control device 8 as the rotational frequency instruction and position instruction pulse signals 35.

Rotational frequency feedback and position feedback signals 36 are output from the second rotary encoder 5, 37 is a position instruction integrating counter integrating the above-mentioned rotational frequency instruction and position instruction pulse signals 35, 38 is a position feedback integrating counter integrating the above-mentioned rotational frequency feedback and position feedback pulse signals. Further, 39 is a position error pulse, 40 is position error amplifier amplifying the position error pulse, and the output of the position error amplifier 40 is added with the rotational frequency instruction and position instruction pulse signals 35 and the rotational frequency feedback and position feedback pulse signals 36 and the difference of the rotational frequency error among them, and input to the rotational frequency control amplifier 41. The rotational frequency control amplifier 41 amplifies the addition result of the position errors and rotational frequency errors and is output to the above-mentioned electric motor driving unit 7.

As shown in FIG. 1 and FIG. 2, the synchronous position control device 8 receives the rotational frequency detecting and position detecting signals 12 from the first rotary encoder 11 attached to the driving axis (main axis) 27 of the fixed rotary machine through the pulse distributor 13 as the rotational frequency instruction and position instruction pulse signals 35, and receives the rotational frequency feedback and position feedback signals 36 from the second rotary encoder 5 attached to the main electric motor 4 driving the extension unit 1, and based on them, calculates the synchronous position control calculation and gives torque instructions to the electric motor driving device 7, and synchronously drives the main electric motor 4. That is, it integrates the rotational frequency instruction and position instruction pulse signals 35 sent from the first rotary encoder 11 attached to the driving axis (main axis) 27 of the fixed rotary machine by the position instruction integrating counter 37.

On the other hand, the rotational frequency feedback and position feedback signals 36 sent from the second rotary encoder 5 attached to the main electric motor 4 of the extension unit are integrated by the position feedback integration counter 38.

Further position error pulse 39 is found by calculation of the difference of the above-mentioned counter 37, 38 and amplified by the position error amplifier 40.

Further rotational frequency error is found by the deference between the above-mentioned rotational frequency instruction and position instruction pulse signals 35 and the rotational frequency feedback and position feedback signals 36, and added to the above-mentioned position error, and this signal is calculated as the rotational frequency control calculation by the rotational frequency control amplifier 41, and the torque instructions are sent to the electric motor driving device 7.

By this, the rotation of the main electric motor 4 of the extension unit 1 is synchronized to the rotational frequency reference and position reference 14 output from the first rotary encoder 11 with high accuracy, so that the extension unit and the fixed rotary machine can be driven synchronously without connecting the axis of the extension unit to it of the fixed rotary machine mechanically.

As mentioned above, in the present invention, when a new unit is extended additionally to a fixed rotary machine etc., the fixed rotary machine and the extension machine are controlled synchronously with high accuracy without connecting the axis of the fixed machine to the axis of the extension machine mechanically.

Also, when a new unit is extended additionally to a fixed machine, it is not necessary for the extension unit to be arranged in line with the fixed machine on a floor, so that the restriction of the setting space is very moderated and the additional extension is implemented easily.

Additionally, as the axis of the fixed machine and the axis of the extension machine are not connected mechanically, centering of the axes of both machines is not necessary in the set-up, so that the setting up work for expanding can be implemented very easily and in a short time.

Although the invention has been described in its preferred form with a certain degree of particularity, it is understood that the present disclosure of the preferred form may be changed in the details of components without departing from the scope of the invention as hereinafter claimed.

## Claims

1. A control method for synchronously driving a fixed rotary machine(21) and extension rotary machines that are respectively extended from and not mechanically connected to the fixed rotary machine(21), comprising the steps of:
providing reference rotational frequency and position pulse signals(35) from a first rotary encoder(11) mounted on an axis(27) of the fixed rotary machine (21);
providing feedback rotational frequency and position pulse signals(36) from a second rotary encoder(5) mechanically connected to a main electric motor(4) in each of the extension rotary machines;
inputting the reference rotational frequency and position pulse signals(35), and the feedback rotational frequency and position pulse signals(36) into a synchronous position control device(8) provided to each of the extension rotary machines;
in the synchronous position control device(8),
integrating the reference rotational frequency and position pulse signals(35) with a first integrating counter(37);
integrating the feedback rotational frequency and position pulse signals(36) with a second integrating counter(38);
calculating a position error signal(39) between integrated values of the first integrating counter(37) and ones of the second integrating counter(38);
outputting a rotational frequency control signal obtained by adding the position error signal(39) to a rotational frequency difference between the not integrated reference rotational frequency and position pulse signals(35) and the not integrated feedback rotational frequency and position pulse signals(36) to thereby control the main electric motor(4) of the own extension rotary machine for said synchronously driving.

2. A control device for synchronously driving a fixed rotary machine(21) and extension rotary machines that are respectively extended from and not mechanically connected to the fixed rotary machine(21), comprising:
a first rotary encoder(11) mounted on an axis(27) of the fixed rotary machine(21) for providing reference rotational frequency and position pulse signals(35);
a second rotary encoder(5) mechanically connected to a main electric motor(4) in each of the extension rotary machines for providing feedback rotational frequency and position pulse signals(36);
a synchronous position control device(8) receiving the reference rotational frequency and position pulse signals(35) and the feedback rotational frequency and position pulse signals(36), provided to each of the extension rotary machines;
the synchronous position control device(8) further comprising:
a first integrating counter(37) for integrating the reference rotational frequency and position pulse signals(35);
a second integrating counter(38) for integrating the feedback rotational frequency and position pulse signals(36);
a position error detector for calculating a difference between integrated values of the first integrating counter(37) and ones of the second integrating counter(38);
a means for outputting a rotational frequency control signal obtained by adding the position error signal(39) to a rotational frequency difference between the not integrated reference rotational frequency and position pulse signals(35) and the not integrated feedback rotational frequency and position pulse signals(36) to thereby control the main electric motor(4) of the own extension rotary machine for said synchronously driving.

## Patentansprüche

1. Steuerverfahren zum synchronen Antrieb einer festen Rotationsmaschine (21) und Erweiterungs-Rotationsmaschinen, welche sich jeweils von der festen Rotationsmaschine (21) erstrecken und nicht an diese mechanisch gekoppelt sind, umfassend die Schritte:
Vorsehen eines Referenz-Rotationsfrequenz- und Positionspulssignals (35) von einem ersten Dreh-Codierer (11), welcher auf einer Achse (27) der festen Rotationsmaschine (21) angebracht ist;
Vorsehen eines Rückkopplungs-Rotationsfrequenz und Positionspulssignals (36) von einem zweiten Dreh-Codierer (5), welcher mechanisch mit einem Hauptelektromotor (4) in jeder der Erweiterungs-Rotationsmaschinen verbunden ist;
Eingeben der Referenz-Rotationsfrequenz- und Positionspulssignale (35) und der Rückkopplungs-Rotationsfrequenz- und Positionspulssignale (36) in eine Synchron-Positionssteuereinrichtung (8), welche an jeder der Erweiterungs-Rotationsmaschinen vorgesehen ist;
in der Synchron-Positionssteuereinrichtung (8),
Integrieren der Referenz-Rotationsfrequenz- und Positionspulssignale (35) mit einem ersten Integrationszähler (37);
Integrieren der Rückkopplungs-Rotationsfrequenz- und Positionspulssignale (36) mit einem zweiten Integrationszähler (38);
Berechnen eines Positionsfehlersignals (39) zwischen integrierten Werten des ersten Integrationszählers (37) und denen des zweiten Integrationszählers (38);
Ausgeben eines Rotations-Frequenzsteuersignals, welches durch Addieren des Positionsfehlersignals (39) zu einer Rotations-Frequenzdifferenz zwischen der nicht integrierten Referenz-Rotationsfrequenz- und Positionspulssignale (35) und den nicht integrierten Rückkopplungs-Rotationsfrequenz- und Positionspulssignalen (36) erhalten wird, um **dadurch** den Hauptelektromotor (4) der eigenen Erweiterungs-Rotationsmaschine für den synchronen Antrieb zu steuern.

2. Steuereinrichtung zum synchronen Antrieb einer festen Rotationsmaschine (21) und Erweiterungs-Rotationsmaschinen, welche sich jeweils von der festen Rotationsmaschine (21) erstrecken und nicht an diese mechanisch gekoppelt sind, umfassend:
einen ersten Dreh-Codierer (11), welcher auf einer Achse (27) der festen Rotationsmaschine (21) zum Bereitstellen von Referenz-Rotationsfrequenz- und Positionspulssignalen (35) angebracht ist;
einen zweiten Dreh-Codierer (5), welcher mechanisch an einem Hauptelektromotor (4) in jeder der Erstreckungs-Rotationsmaschinen zum Bereitstellen von Rückkopplungs-Rotationsfrequenz- und Positionspulssignalen (36) angeschlossen ist;
eine Synchron-Positionssteuereinrichtung (8), welche die Referenz-Rotationsfrequenz- und Positionspulssignale (35) und die Rückkopplungs-Rotationsfrequenz- und Positionspulssignale (36) empfängt, die für jede der Erweiterungs-Rotationsmaschinen vorgesehen ist;
wobei die Synchron-Positionssteuereinrichtung (8) ferner umfasst:
einen ersten Integrationszähler (37) zum Integrieren der Referenz-Rotationsfrequenz- und Positionspulssignale (35);
einen zweiten Integrationszähler (38) zum Integrieren der Rückkopplungs-Rotationsfrequenz- und Positionspulssignale (36);
einen Positions-Fehlerdetektor zum Berechnen einer Differenz zwischen integrierten Werten des ersten Integrationszählers (37) und solchen des zweiten Integrationszählers (38);
ein Mittel zum Ausgeben eines Rotations-Frequenzsteuersignals, welches durch Addieren des Positionsfehlersignals (39) zu einer Rotations-Frequenzdifferenz zwischen den nicht integrierten Referenz-Rotationsfrequenz- und Positionspulssignalen (35) und den nicht integrierten Rückkopplungs-Rotationsfrequenz- und Positionspulssignalen (36) erhalten wird, um **dadurch** den Hauptelektromotor (4) der eigenen Erstreckungs-Rotationsmaschine für den synchronen Antrieb zu steuern.

## Revendications

1. Procédé de contrôle pour commander synchronement une machine rotative fixée (21) et des machines d'extension rotatives qui sont respectivement étendées de la machine rotative fixée (21) et ne sont pas connectées mécaniquement à laquelle, comprenant les mesures suivantes:
prévoir des signaux de pulses (35) de reférence, de fréquence rotative et de position d'un premier encodeur (11) rotatif monté sur un axe (27) de la machine rotative fixée (21);
prévoir des signaux de pulses (36) de rétroaction, de fréquence rotative et de position d'un seconde encodeur rotatif (5) connecté mécaniquement à un moteur électrique principal (4) dans chaquune des machines d'extension rotatives;
entrer les signaux de pulses (35) de référence, de fréquence rotative et de position, et des signaux (36) de rétroaction, de fréquence rotative et de position dans un dispositif (8) controllant une position synchrone, qui est prévu à chaquune des machines d'extension rotatives;
dans le dispositif (8) controllant une position synchrone,
intégrer les signaux de pulses (35) de référence, de fréquence rotative et de la position avec un premier compteur intégrant (37);
intégrer les signaux de pulses (36) de rétroaction, de fréquence rotative et de position avec un second compteur intégrant (38);
calculer un signal (39) d'erreur de position entre des valeurs intégrées du premier compteur intégrant (37) et desquelles du seconde compteur intégrant (38);
émetter un signal controllant la fréquence rotative obtenu en ajoutant le signal (39) d'erreur de position à une différence de fréquence rotative entre les signaux de pulses (35) de référence, de fréquence rotative et de position pas intégrés et les signaux de pulses (36) de rétroaction, de fréquence rotative et de position pas intégrés pour controller de cette manière le moteur électrique principal (4) de la machine d'extension rotative propre pour commander synchronement.

2. Dispositif de contrôle pour commander synchronement une machine rotative fixée (21) et des machines d'extension rotatives qui sont extendées respectivement de la machine rotative fixée (21) et ne sont pas connectées mécaniquement à laquelle, comprenant :
un premier encodeur rotatif (11) monté sur un axis (27) de la machine rotative fixée (21) pour prévoir des signaux de pulses (35) de référence, de fréquence rotative et de position;
un seconde encodeur rotatif (5) qui est connecté mécaniquement à un moteur électrique principal (4) dans chaquune des machines d'extension rotatives pour prévoir des signaux de pulses (36) de rétroaction, de fréquence de rotation et de position;
un dispositif (8) controllant une position synchrone, qui reçoit les signaux de pulses (35) de référence, de fréquence rotative et de position et les signaux de pulses (36) de rétrocation, de fréquence rotative et de position, prévus à chaquune des machines rotatives d'extension;
le dispositif (8) controllant une position synchrone comprenant en outre:
un premier compteur intégrant (37) intégrant les signaux de pulses (35) de référence, de fréquence rotative et de position;
un seconde compteur intégrant (38) intégrant les signaux de pulses (36) de rétroaction, de fréquence rotative et de position ;
un détecteur d'erreur de position pour calculer une différence entre des valeurs intégrées du premier compteur intégrant (37) et quelques du seconde compteur intégrant (38);
moyen pour émetter un signal controllant la fréquence rotative obtenu par ajoutant le signal (39) d'erreur de position à une différence de fréquence rotative entre les signaux de pulses (35) de référence, de fréquence rotative et de position pas intégrés et les signaux de pulses (36) de rétroaction, de fréquence rotative et de position pas intégrés pour controller de cette manière le moteur électrique principal (4) de la machine d'extension rotative propre pour commander synchronement.
